# EUROPEAN PATENT SPECIFICATION

(11) **EP 1 601 901 B1**
(45) Date of publication and mention of the grant of the patent: **21.06.2006**
(21) Application number: 04718360.3
(22) Date of filing: 08.03.2004
(51) Int. Cl.: F16K 31/34, F16K 31/385

(54) **TOILET CISTERN FILLING VALVE**
FÜLLVENTIL FÜR TOILETTENSPÜLKASTEN
VALVE DE REMPLISSAGE DE RESERVOIR DE W-C

(30) Priority: 10.03.2003 ZA 200301926
(43) Date of publication of application: 07.12.2005
(73) Proprietor: Haslam, James Churchill, 2192 Johannesburg (ZA)
(72) Inventor: Haslam, James Churchill, 2192 Johannesburg (ZA)
(74) Representative: Thomson, Neil David
(86) International application number: PCT/IB2004/000621
(87) International publication number: WO 2004/081435

(56) References cited:
- EP-A- 0 319 124
- EP-A- 0 470 642
- EP-A- 1 116 909
- GB-A- 1 532 210

## Description

### FIELD OF THE INVENTION

This invention relates to filling valves for toilet cisterns and more particularly to automatically closing valves.

### BACKGROUND TO THE INVENTION

Toilet filling valves which operate to close against pressure under the influence of a float mounted on a lever arm are widely used. They are however subject to leakage and consequently it is desirable to have such a valve which is pressure assisted.

GB 1 532 210 describes such a toilet filling valve and corresponds to the preamble of claim 1.

GB 1 532 210 describes a pressure assisted valve having an inlet into a chamber and an outlet from the chamber, wherein the inlet and outlet open adjacent each other into the chamber separated by a seal face for a diaphragm closure member in the chamber, with an axially movable pintle located through the diaphragm, a chamber vent opening from the chamber closable by an enlarged end to the pintle, a control spindle extending from the enlarged end of the pintle through the chamber vent opening, at least one bleed passage past the pintle into the chamber, and a manipulating mechanism at the spindle end to move the pintle to open the chamber vent opening.

### OBJECT OF THE INVENTION

It is an object of this invention to provide a pinkle which is strong enough to withstand high pressures and small enough to provide a small bleed passage. At the same time the pintle should provide for a proper sealing without leakage.

### SUMMARY OF THE INVENTION

A further feature of the invention provides for the outlet to be formed around the inlet.

The characterizing feature of this invention provides for the pintle to be a composite structure of plastic material with a metal spindle.

A further feature of this invention provides for the manipulating mechanism to be an arm pivoted at one end and having depending from the other a combination float and anti-float assembly, the assembly being adjustable in height relative to the valve and guided on a cistern filling pipe.

Further features of this invention provide for the metal spindle having one end embedded in the plastic material, for the bleed passage to be provided by ribs located around and extending along the pintle slidable through the diaphragm and for the ribs to act as a filter.

The invention also provides for the pintle to be supported by a perforated guide in the valve inlet, for the guide to be resiliently biased to close the enlarged end of the pintle against the chamber vent opening and for the enlarged end to form a tapered plug.

Further features of the invention provide for the chamber vent opening to be lined with resilient material and for the diaphragm to have an annular ring of increased flexibility adjacent its outer periphery.

### BRIEF DESCRIPTION OF THE DRAWINGS

These and other features of this invention will become apparent from the following description of three embodiments, by way of example only, wherein reference is made to the accompanying drawings in which:
- Figure 1: shows a cross-section through a valve having a side type inlet in the closed position;
- Figure 2: shows a cross-section through the valve shown in Figure 1 in the open position together with its valve operating mechanism;
- Figure 3: shows a cross-section through an alternative embodiment of a valve with a side type inlet in the closed position;
- Figure 4: shows the valve of Figure 3 together with its valve operating mechanism;
- Figure 5: shows a cross-section through a valve having a bottom type inlet in the closed position with its valve operating mechanism.

### DETAILED DESCRIPTION OF THE INVENTION

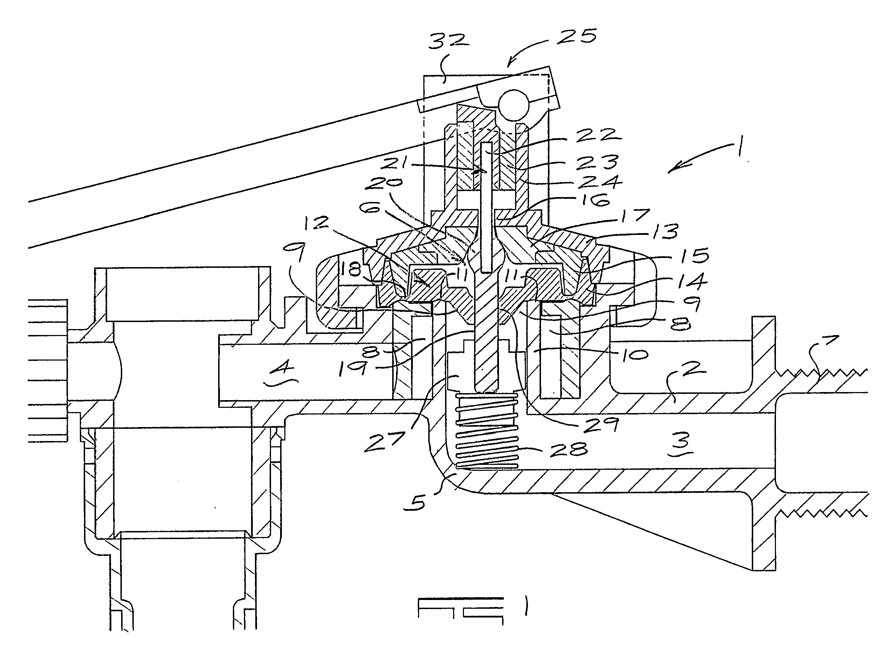

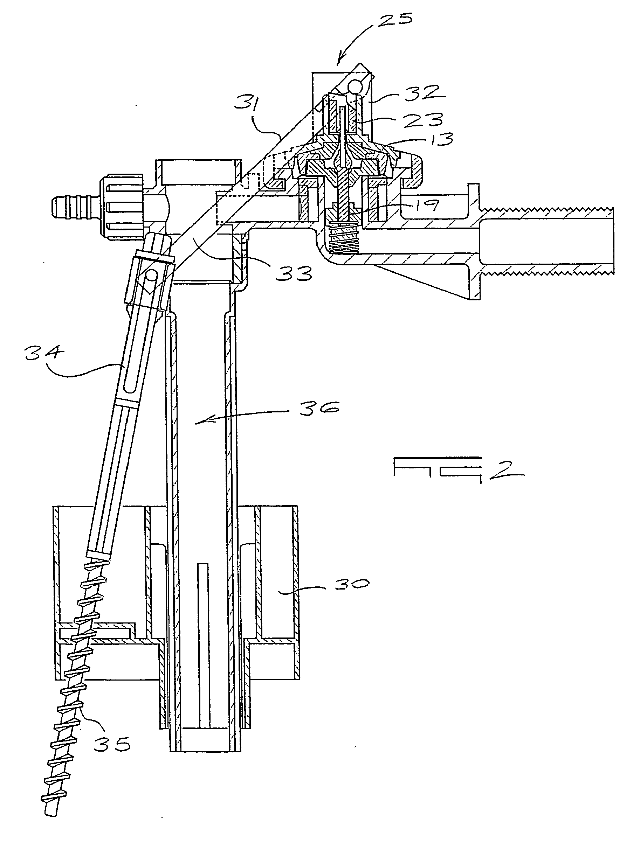

As illustrated in Figures 1 and 2, one embodiment of a toilet cistern filling valve (1) consists of a body (2) having an inlet (3) and an annular outlet (4) around the inlet (3) into a cistern (not shown). The inlet (3) extends from the side of the valve (1) and has an upward bend (5) to open into a chamber (6).

The inlet (3) has a screw threaded connection (7) to enable the valve (1) to be secured to extend through the cistern wall for connection into a water supply under pressure. The chamber (6) has an annular outlet opening (8) concentric around the inlet opening (9). The inlet opening (9) and outlet opening (8) are separated by a tubular extrusion (10), the top end of which forms an annular seal face (11). The face (11) is engageable by a diaphragm closure member (12) to control flow between the openings (8) and (9).

The chamber (6) has a top (13) which is made as a closure which secures the peripheral portion (14) of the diaphragm (12) in position in sealing engagement. This engagement can conveniently be effected by a rigid ring (15) inserted above the diaphragm (12) to be clamped in position by the top (13).

The top (13) has a central vent opening (16) which is lined with resilient material in the form of a resilient seal (17) located around the vent opening (16) between the top (13) and the ring (15). The ring (15) supports the resilient seal (17). In this embodiment, the top (13) is secured to the body (2) by bayonet type engaging formations, however any other suitable arrangement for engagement of these components (13) and (2) can be provided.

To give the diaphragm (12) the resilience required for its best operation an annular thin section (18) provides increased flexibility adjacent its periphery. This enables the central part to move easily into and out of the closure position on the face (11) located between the inlet opening (9) and annular outlet opening (8).

The central part of the diaphragm (12) is tapered downwardly into the inlet opening (9) and a preferably moulded plastics material pintle (19) extends through the center of the diaphragm (12). The upper end of the pintle (19) is operatively located within the chamber (6) and has an enlargement on its end in the form of a tapered plug (20).

This plug (20) engages in the resilient seal (17) to close the vent opening (16) from the chamber (6).

A preferably stainless steel operating spindle (21) is embedded in the pintle (19) to extend through the vent opening (16) where the free end (22) is located in a recess provided in a slide (23). The slide (23) is supported in an extension (24) from the top (13) of the chamber (6). The upper face of slide (23) is exposed and can be engaged by a suitable manipulating mechanism indicated at (25).

The lower end of the pintle (19) is secured to a slidable guide (27) that is located in the inlet (3) to the body (2). This guide (27) is perforated to allow water to flow through the valve (1) and is also resiliently biased by a compression spring (28) to assist the closure of the plug (20) against the seal (17).

Essential to the construction is a bleed passage indicated at (29) providing for a bleed flow from the inlet (3) into the chamber (6) above the diaphragm (12). This passage (29) between the pintle (19) and the diaphragm (12) is provided by ribs located around and extending along the pintle (19) which slides in the diaphragm (12). The ribs act as a filter to prevent debris entrained in the inlet water supply from entering the chamber (6). This in turn ensures that the passageway that opens during operation of the valve (1), between the tapered plug (20) and the seal (17), will not become filled with obstructing debris.

The manipulating mechanism (25) and consequently the operation of the filling valve (1) is activated by the influence of the rise and fall of the water level in the cistern on a combination float and anti-float assembly (30) such that when the cistern flushing valve is opened the filling valve (1) will open. The flushing valve (not shown) closes automatically after discharge of water and the filling valve (1) closes after the cistern has been filled as required.

Figure 2 illustrates the operating means for the valve (1) of Figure 1.

An arm (31) is pivoted to a projection (32) from the top (13) adjacent the exposed face of slide (23). The arm (31) is shaped so that pivoting thereof in an operatively downward direction will depress the slide (23) and consequently the tapered plug (20) to open the vent opening (16) from the chamber (6).

The free end (33) of the arm (31) has a downwardly depending rod (34) screw threaded at its lower end (35). This end (35) engages the combination float and anti-float assembly (30) in a manner enabling the position of assembly (30) to be adjustable within the toilet cistern.

The assembly (30) can conveniently be guided for movement on a cistern filling pipe (36) discharging into the lower part of the cistern in conventional manner.

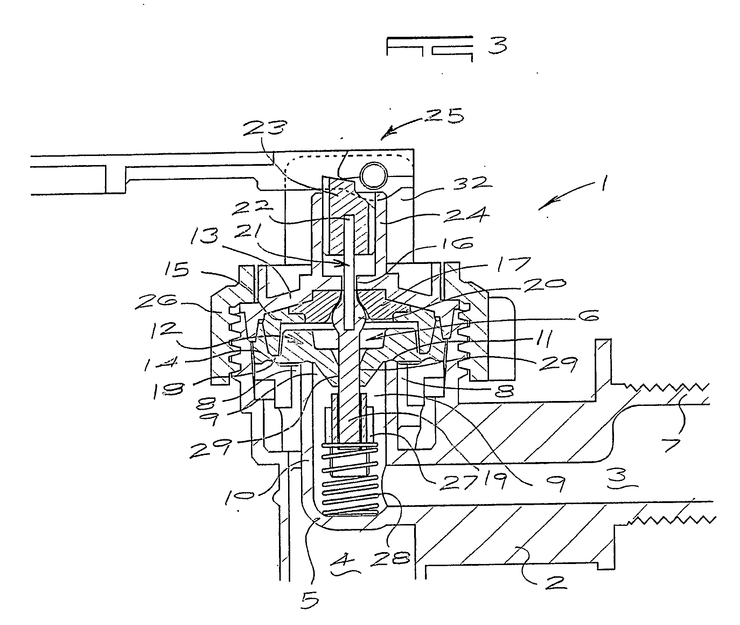

The embodiment of the valve (1) shown in Figure 3 is substantially the same as that of Figure 1. Both Figures are accordingly labeled with the same reference numerals. The main difference is that the valve (1) in Figure 3 is adapted for mounting directly above the filling pipe (36). This valve (1) also has a union nut (26) which engages with threads on the body (2) to secure the top (13) in position.

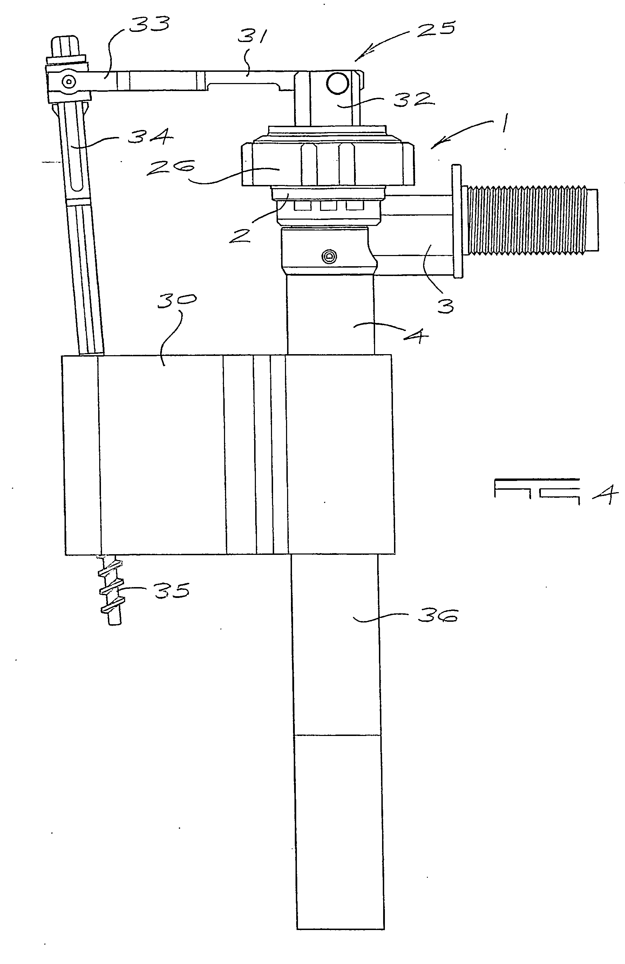

The position of this embodiment of the valve (1) can be seen more clearly from Figure 4, which also shows the union nut (26) and operating mechanism.

In use, as mentioned, flushing of the cistern causes automatic opening of the inlet valve (1).

The drop of water level in the cistern brings the anti-float component of assembly (30) into effect to pull rod (34) and thus the arm (31) downwards activating slide (23) and spindle (21) to cause the tapered plug (20) to move out of sealing engagement with seal (17).

This enables water to flow from chamber (6) through vent opening (16) resulting in a pressure reduction in chamber (6) as water flow into the chamber (6) is restricted by the bleed passage indicated at (29). Under differential water pressure from the inlet (3), diaphragm (12) is flexed to open the inlet (3) to the outlet (4) to allow water to flow to fill the cistern.

As the cistern fills the bleed flow through passage (29) passes through chamber outlet opening (16) until the float component of assembly (30) becomes effective. The arm (31) then rises to relieve the downward force exerted on the face of slide (23) by the ballast effect out of water of the anti-float component of assembly (30) on arm (31). This relief causes the slide (23), spindle (21) and plug (20) to move, under action of inlet water pressure and the resilient biasing of spring (28), to a position wherein sealing engagement is re-established between plug (20) and resilient seal (17).

When this occurs water bleeding into the chamber (6) from the inlet (3) fills the chamber (6) causing the diaphragm (12) to close onto face (11) under the differential force exerted by the same water pressure on the greater area of the diaphragm (12) on the chamber (6) side compared to the smaller area of diaphragm (12) exposed to water inlet pressure on its opposite side. This differential force holds valve (1) closed thus providing a reliable cistern filling valve (1) that will give a controlled filling volume and pressure assisted closure of the valve (1).

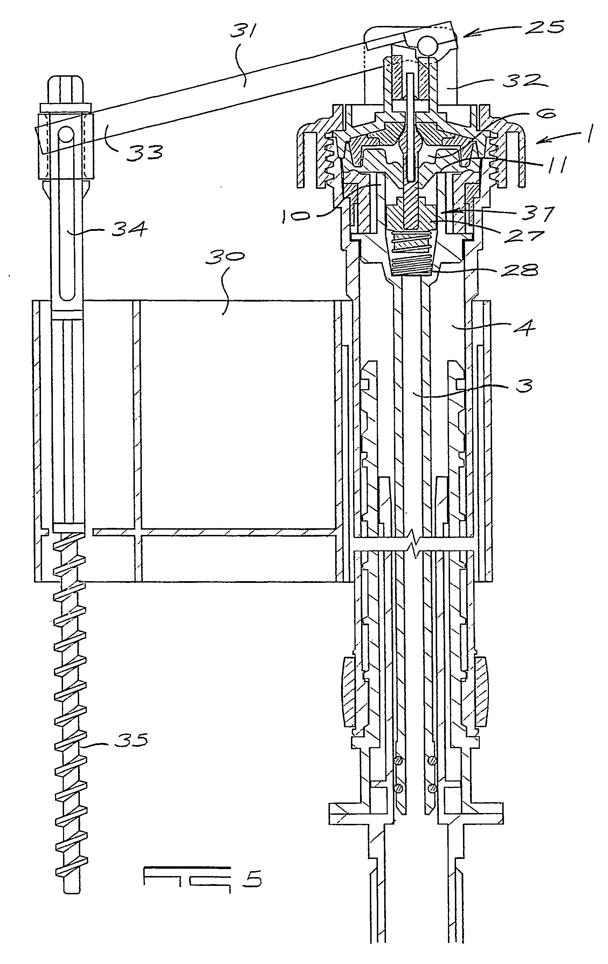

Figure 5 shows a valve (1) with a bottom type inlet (3) but otherwise substantially the same as those already described. The inlet (3) is straight and extends upwardly from the bottom of the cistern. The inlet (3) similarly opens into the chamber (6). The length of the inlet (3) from the bottom of the cistern is of a smaller diameter than an upper portion (37) spaced apart from the seal face (11). The enlarged portion (37) of the inlet (3) houses the slidable guide (27). An annular shoulder is provided at the lower end of the portion (37) against which the compression spring (28) seats. The upper region of the portion (37) forms the tubular extrusion (10).

This embodiment allows for the float and anti-float assembly (30) to be guided for movement on the inlet pipe as shown.

## Claims

1. A pressure assisted valve (1) having an inlet (3) into a chamber (6) and an outlet (4) from the chamber, with the inlet (3) and outlet (4) opening adjacent each other into the chamber (6) separated by a seal face (11) for a diaphragm closure member (12) located in the chamber (6), an axially movable pintle (19) located "through the diaphragm (12), a chamber vent opening (16) from the chamber (6) closable by an enlarged end (20) of the pintle (19), a control spindle (21) extending from the enlarged end (20) of the pintle (19) through the chamber vent opening (16), at least one bleed passage (29) located between the pintle (19) and the diaphragm (12) into the chamber (6), and a manipulating mechanism (25) at the spindle (21) end to move the pintle (19) to open the chamber vent opening (16), **characterized in that** the pintle (19) and spindle (21) are of a composite structure with the pintle (19) of plastics material and the spindle (21) of metal.

2. A valve (1) as claimed in claim 1 in which one end of the spindle (21) is embedded into the enlarged end (20) of the pintle (19).

3. A valve (1) as claimed in claim 1 or claim 2 in which the spindle (21) is stainless steel.

4. A valve (1) as claimed in any of the preceding claims in which the outlet (4) is formed around the inlet (3).

5. A valve (1) as claimed in any one of the preceding claims in which the manipulating mechanism (25) is an arm (31) pivoted at one end to the valve (1) and extending from the pivot to engage the free end (22) of the spindle (21), with a combination float and anti-float assembly (30) depending from the other end (33).

6. A valve (1) as claimed in claim 5 in which the arm engages the spindle (21) through a slide (22) supported in an extension (24) from the valve (1).

7. A valve (1) as claimed in claim 6 in which the assembly (30) is adjustable in height relative to the end (33) of the arm (31) and guided on a cistern filling pipe (36).

8. A valve (1) as claimed in any one of the preceding claims in which the bleed passage (29) is provided by ribs located around and extending along the pintle (19) slidable through the diaphragm (12).

9. A valve (1) as claimed in claim 8 in which the ribs act as a filter.

10. A valve (1) as claimed in any one of the preceding claims in which the pintle (19) is supported by a perforated guide (27) in the valve (1) inlet (3), resiliently biased to close the enlarged end (20) of the pintle (19) against the chamber vent opening (16).

11. A valve (1) as claimed in any one of the preceding claims in which the enlarged end of the pintle (19) forms a tapered plug (20).

12. A valve (1) as claimed in any one of the preceding claims in which the chamber vent opening (16) is lined with resilient material.

13. A valve (1) as claimed in any one of the preceding claims in which the diaphragm has an annular ring of increased flexibility adjacent its outer periphery.

## Patentansprüche

1. Druckunterstütztes Ventil (1), mit einem Einlass (3) in eine Kammer (6) und einen Auslass (4) aus der Kammer, wobei der Einlass (3) und der Auslass (4) nebeneinander in die Kammer (6) münden und durch eine Dichtungsfläche (11) für ein in der Kammer (6) vorhandenes Membranverschlusselement (12) getrennt sind, einem axial beweglichen Zapfen (19), der durch die Membran (12) verlaufend angeordnet ist, einer Kammerentlüftungsöffnung (16) aus der Kammer (6), die durch ein erweitertes Ende (20) des Zapfens (19) verschließbar ist, einer Steuerspindel (21), die sich von dem erweiterten Ende (20) des Zapfens (19) durch die Kammerentlüftungsöffnung (16) erstreckt, wenigstens einem zwischen dem Zapfen (19) und der Membran (12) angeordneten Entleerungsdurchlass (29) in die Kammer (6) und einem Betätigungsmechanismus (25) an dem Ende der Spindel (21), um den Zapfen (19) zu bewegen, um die Kammerentlüftungsöffnung (16) zu öffnen, **dadurch gekennzeichnet, dass** der Zapfen (19) und die Spindel (21) aus einer Verbundstruktur bestehen, wobei der Zapfen (19) aus Kunststoff besteht und die Spindel (21) aus Metall besteht.

2. Ventil (1) nach Anspruch 1, bei dem ein Ende der Spindel (21) in das erweiterte Ende (20) des Zapfens (19) eingebettet ist.

3. Ventil (1) nach Anspruch 1 oder Anspruch 2, bei dem die Spindel (21) rostfreier Stahl ist.

4. Ventil (1) nach einem der vorhergehenden Ansprüche, bei dem der Auslass (4) um den Einlass (3) ausgebildet ist.

5. Ventil (1) nach einem der vorhergehenden Ansprüche, bei dem der Betätigungsmechanismus (25) ein Arm (31) ist, der an einem Ende an dem Ventil (1) angelenkt ist und sich von dem Zapfen erstreckt, um mit dem freien Ende (22) der Spindel (21) in Eingriff zu gelangen, und mit einer von dem anderen Ende (33) herabhängende kombinierte Schwimmer- und Antischwimmer-Baugruppe (30) versehen ist.

6. Ventil (1) nach Anspruch 5, bei dem der Arm mit der Spindel (21) über einen Gleiter (22) in Eingriff ist, der in einer Verlängerung (24) des Ventils (1) unterstützt ist.

7. Ventil (1) nach Anspruch 6, bei dem die Höhe der Baugruppe (30) in Bezug auf das Ende (33) des Arms (31) einstellbar ist und an einem Zisternenbefüllungsrohr (36) geführt ist.

8. Ventil (1) nach einem der vorhergehenden Ansprüche, bei dem der Entleerungsdurchlass (29) durch Rippen vorgesehen ist, die sich um den Zapfen (19), der durch die Membran (12) gleiten kann, befinden und erstrecken.

9. Ventil (1) nach Anspruch 8, bei dem die Rippen als ein Filter wirken.

10. Ventil (1) nach einem der vorhergehenden Ansprüche, bei dem der Zapfen (19) durch eine durchlochte Führung (27) in dem Einlass (3) des Ventils (1) unterstützt ist, die elastisch vorbelastet ist, um das erweiterte Ende (20) des Zapfens (19) gegen die Kammerentlüftungsöffnung (16) zu schließen.

11. Ventil (1) nach einem der vorhergehenden Ansprüche, bei dem das erweiterte Ende des Zapfens (19) einen konisch zulaufenden Stopfen (20) bildet.

12. Ventil (1) nach einem der vorhergehenden Ansprüche, bei dem die Kammerentlüftungsöffnung (16) mit einem elastischen Werkstoff ausgekleidet ist.

13. Ventil (1) nach einem der vorhergehenden Ansprüche, bei dem die Membran einen Kreisring mit erhöhter Flexibilität in der Nähe ihres äußeren Umfangs besitzt.

## Revendications

1. Valve assistée par pression (1) comportant une arrivée (3) dans une chambre (6) et une sortie (4) à partir de la chambre, l'arrivée (3) et la sortie (4) s'ouvrant de manière mutuellement adjacente dans la chambre (6) séparée par une surface d'étanchéité (11) d'un élément de fermeture à diaphragme (12) situé dans la chambre (6), une aiguille à déplacement axial (19) située à travers le diaphragme (12), un orifice d'aération de la chambre (16) à partir de la chambre (6) pouvant être fermé par une partie élargie (20) de l'aiguille (19), une broche de commande (21) s'étendant à partir de la partie élargie (20) de l'aiguille (19) à travers l'orifice d'aération de la chambre (16), au moins un passage d'écoulement (29) situé entre l'aiguille (19) et le diaphragme (12) dans la chambre (6), et un mécanisme de manipulation (25) au niveau de l'extrémité de la broche (21) pour déplacer l'aiguille (19) pour ouvrir l'orifice d'aération de la chambre (16), **caractérisée en ce que** l'aiguille (19) et la broche (21) sont d'une structure composite, l'aiguille (19) étant en matière plastique et la broche (21) étant en métal.

2. Valve (1) selon la revendication 1, dans laquelle une partie de la broche (21) est incluse dans la partie élargie (20) de l'aiguille (19).

3. Valve (1) selon la revendication 1 ou 2, dans laquelle la broche (21) est en acier inoxydable.

4. Valve (1) selon l'une quelconque des revendications précédentes, dans laquelle la sortie (4) est formée autour de l'arrivée (3).

5. Valve (1) selon l'une quelconque des revendications précédentes, dans laquelle le mécanisme de manipulation (25) est un bras (31) pivotant à une extrémité vers la valve (1) et s'étendant depuis le pivot pour venir en contact avec l'extrémité libre (22) de la broche (21), un ensemble flotteur et antiflotteur en combinaison (30) dépendant de l'autre extrémité (33).

6. Valve (1) selon la revendication 5, dans laquelle le bras vient en contact avec la broche (21) par une coulisse (22) reposant dans un prolongement (24) à partir de la valve (1).

7. Valve (1) selon la revendication 6, dans laquelle l'ensemble (30) est réglable en hauteur par rapport à l'extrémité (33) du bras (31) et est guidé sur un tuyau de remplissage de réservoir (36).

8. Valve (1) selon l'une quelconque des revendications précédentes, dans laquelle le passage d'écoulement (29) est muni de nervures situées autour et s'étendant le long de l'aiguille (19) pouvant coulisser à travers le diaphragme (12).

9. Valve (1) selon la revendication 8, dans laquelle les nervures agissent comme un filtre.

10. Valve (1) selon l'une quelconque des revendications précédentes, dans laquelle l'aiguille (19) est supportée par un guide perforé (27) dans l'arrivée (3) de la valve (1), sollicité élastiquement pour former la partie élargie (20) de l'aiguille (19) contre l'orifice (16) d'aération de la chambre.

11. Valve (1) selon l'une quelconque des revendications précédentes, dans laquelle la partie élargie de l'aiguille (19) forme un bouchon effilé (20).

12. Valve (1) selon l'une quelconque des revendications précédentes, dans laquelle l'orifice d'aération de la chambre (16) est doublé d'un matériau élastique.

13. Valve. (1) selon l'une quelconque des revendications précédentes, dans laquelle le diaphragme comporte une bague annulaire à flexibilité accrue et adjacent à sa périphérie externe.
